# EUROPÄISCHE PATENTSCHRIFT

(11) **EP 1 201 586 B1**
(45) Veröffentlichungstag und Bekanntmachung des Hinweises auf die Patenterteilung: **06.09.2006**
(21) Anmeldenummer: 01124303.7
(22) Anmeldetag: 19.10.2001
(51) Int. Cl.: B65H 29/04, B65H 29/68

(54) **Vorrichtung und Verfahren zum Verändern der Geschwindigkeit von bogenförmigen Produkten**
Method and device for varying the speed of sheet-like products
Méthode et dispositif pour faire varier la vitesse de produits en forme de feuilles

(30) Priorität: 30.10.2000 US 699893
(43) Veröffentlichungstag der Anmeldung: 02.05.2002
(73) Patentinhaber: Goss International Americas, Inc., Dover, NH 03820 (US)
(72) Erfinder: Charles, Lambert Krouse, Madbury, NH 03820 (US)
(74) Vertreter: Domenego, Bertrand

(56) Entgegenhaltungen:
- US-A- 4 203 590
- US-A- 4 887 809
- US-A- 5 054 621
- US-A- 5 221 079

## Beschreibung

Die Erfindung betrifft allgemein Druckmaschinen, und im Speziellen eine Vorrichtung und ein Verfahren zum Transport eines bogenförmigen Produkts, nach den Oberbegriffen der Ansprüche 1 und 11. Eine solche Vorrichtung und ein solches Verfahren sind z.B. aus der US-A-4,887,809 bekannt.

Rollenrotationsdruckmaschinen bedrucken eine kontinuierliche Materialbahn, wie beispielsweise Papier. In einem Falzapparat der Druckmaschine wird die kontinuierliche Bahn anschließend in einer Schneideinheit in Signaturen geschnitten und gefalzt.

Ein Weg, die Geschwindigkeit der Signaturen zu verringern, besteht in der Verwendung eines Schaufelrades. Schaufelräder umfassen eine Vielzahl von Schaufelradscheiben, die durch eine Vielzahl von nach außen hervorstehenden kurvenförmigen Schaufelradblättern definiert werden. Die von aneinandergrenzenden Schaufelradblättern gebildeten Schaufelradtaschen nehmen dabei die Signaturen auf, wenn diese den Falzapparat verlassen. Die gebogene Form und die schartige Oberfläche der Schaufelräder verlangsamen dabei die Vorwärtsbewegung der Signaturen, die in den Schaufelradtaschen abgelegt werden. Wenn das Schaufelrad rotiert, wird eine jeweilige Signatur auf einem Transportsystem, wie beispielweise auf einem Transportband, abgelegt. Ein Nachteil der Schaufelräder besteht darin, dass die Signaturen aufgrund ihrer hoher Geschwindigkeit, mit der sie in die Schaufelradtaschen einlaufen, mit großer Kraft gegen die Schaufelblätter des Schaufelrades auftreffen, wodurch die Signaturen reißen, oder in sonstiger Weise beschädigt werden. Ein anderer Nachteil dieser Vorrichtungen besteht darin, dass die Signaturen nicht präzise in Richtung des Bodens der Schaufelradtaschen gerichtet oder geleitet werden können. Der Grund hierfür besteht darin, dass eine Anzahl von Faktoren ins Spiel kommen, wenn die Signaturen aus den zum Schaufelrad führenden Transportbändern herauskommen, wie beispielsweise die Papierstärke, die Anzahl der Seiten einer Signatur, die Natur des Papiers, und sogar die Menge von Farbe auf den Signaturen, welche allesamt die Bewegung der Signaturen beeinflussen, so dass - in Abhängigkeit von der kumulativen Wirkung solcher Faktoren - die Signatur exakt am Boden der Schaufelradtasche landet oder zurückgeworfen wird, oder sich an der Kante eines Schaufelradblattes verfängt. Sobald eine Signatur in nicht ordnungsgemäßer Weise auf dem Boden des Schaufelrades positioniert ist, wird die Signatur in der gleichen nicht ordnungsgemäßen Weise auf dem Transportband positioniert, und der Produktstrom auf dem Transportband weist mit hoher Wahrscheinlichkeit in lateraler Richtung versetzte, ungleichmäßig beabstandete oder schräg angeordnete Signaturen auf, insbesondere, wenn eine große Verringerungen der Geschwindigkeit erforderlich ist.

Ein weiterer Weg, Signaturen zu verlangsamen, ist eine Verzögerungstrommel (Deceleration Drum). Die Verzögerungstrommel umfasst eine Anzahl von Greiferreihen, die zwischen einer Zufuhreinrichtung und einem Auslagesystem rotieren. Der Greifer ergreift die vorlaufende Kante einer Signatur, die eine Transportvorrichtung in einem Falzapparat verlässt. Der Greifer ist an einer Trommel befestigt, welche die Geschwindigkeit der Signatur herabsetzt.

Ein Nachteil der Verzögerungstrommel ist darin zu sehen, dass der Transfer der Signaturen von der Zufuhreinrichtung eine Positionierung der Verzögerungstrommel in der Weise erfordert, dass der Greifer vor der vorlaufenden Kante der durch die Zuführeinrichtung zugeführten Signatur rotiert. Somit sollte die Geschwindigkeit der durch die Zuführeinrichtung kontrollierten Signatur größer als die tangentiale Geschwindigkeit des Greifers auf der Verzögerungstrommel sein. Wenn die Signatur den Grund des Greifers erreicht hat, schließt der Greifer und die Geschwindigkeit der vorlaufenden Kante des Produktes wird abrupt geändert, um die Geschwindigkeit des Greifers mit der Geschwindigkeit der Signatur in Einklang zu bringen. Die abrupte Änderung der Geschwindigkeit kann zu einer Beeinträchtigung oder zu einem Einreißen der Signatur führen. Ein weiterer Nachteil der Vorrichtung besteht darin, dass diese eine Vielzahl von komplizierten Teilen benötigt, die einer mechanischen Abnutzung sowie einer Ermüdung unterliegen.

US 5,975,280 beschreibt eine Vorrichtung zum Transport von flachen Produkten zu weiteren Verarbeitungseinheiten. Das Patent beschreibt eine Bahn, die eine endlose Schleife bildet, eine Vielzahl von Greiferelementen und ein Antriebsmodul. Die Greiferelemente sind auf der Bahn angeordnet und umfassen einen Greifer zum Ergreifen eines flachen Produkts von einer ersten Vorrichtung und Freigabe des flachen Produkts an eine zweite Vorrichtung. Jedes Greiferelement bewegt sich unabhängig von jedem der anderen Greiferelemente entlang mittels eines Abschnitts der Bahn. Jedes Greiferelement wird wahlweise vom Antriebsmodul ergriffen, um das Greiferelement entlang der Bahn zu bewegen.

Die in der US 5,975,280 beschriebene Vorrichtung hat den Nachteil, dass eine komplexe Anordnung von mehreren mechanischen Teilen erforderlich ist, um den Übergang der flachen Produkte zu bewerkstelligen. Die komplexe Anordnung führt zu einem mechanischen Verschleiß und zu Ermüdungserscheinungen. Darüber hinaus macht die Komplexität der Vorrichtung die Reparatur und den Service derselben kompliziert.

US 5,794,929 beschreibt eine Verzögerungsvorrichtung mit einem variablen Geschwindigkeitsprofil. Das Patent sieht hierzu vor, eine Signatur mit hoher Geschwindigkeit von einem Schneidzylinder, einem Bandsystem oder einer anderen Transportvorrichtung zu ergreifen. Die Signaturen werden hierbei positiv ergriffen, sanft durch ein Geschwindigkeitsprofil verzögert und einer weiteren Verarbeitungseinrichtung zugeführt, wie beispielsweise einem Einzelblattgreifer, Transportband oder einer Stapeleinrichtung. Die Verzögerungsvorrichtung umfasst eine Vielzahl von an einer Trommel befestigten rotierenden Greifer, die unter der Kontrolle von einem Antrieb um eine Achse rotieren. Eine Kontrolleinheit überwacht hierbei die Winkelposition der rotierenden Greifer und die Rotationsgeschwindigkeit der rotierenden Trommel, und steuert hierbei jeden Greifer individuell in der Art, dass dieser eine die Transportvorrichtung verlassende Signatur ergreift.

Die im Patent beschriebene Vorrichtung besitzt den Nachteil, dass eine komplexe Anordnung von mehreren mechanischen Teilen erforderlich ist, um die Übergabe oder den Transfer der flachen Produkte zu bewerkstelligen. Die komplexe Anordnung führt zu einem Verschleiß und zu Ermüdungserscheinungen.

Weiterhin macht die Komplexität der Vorrichtung die Reparatur und den Service aufwändig.

US 5,452,886 beschreibt eine Vorrichtung zum Verzögern von Signaturen, die in einem Falzapparat transportiert werden. Die Vorrichtung umfasst eine Vielzahl von rotierenden Greifern, die die Signaturen positiv ergreifen, wenn diese ein Transportbandsystem verlassen. Eine Verzögerungstrommel ist in gleicher Weise vorgesehen, um die Greifer durch ein sanftes Geschwindigkeitsprofil zu verzögern. Die Verzögerungstrommel hat eine Vielzahl von Schwenkarmen, die schwenkbar an einer Schwenkscheibe befestigt sind, und um eine erste Achse rotieren, wobei die Schwenkarme über ein Steuer-Verbindungselement mit einer Steuerscheibe verbunden sind. Die im Patent beschriebene Vorrichtung weist den Nachteil auf, dass eine komplexe Anordnung von mehreren mechanischen Teilen, beispielsweise einer Schwenkscheibe, erforderlich ist, um die Übergabe der flachen Produkte zu bewerkstelligen. Die Komplexität der Vorrichtung führt dazu, dass die Vorrichtung mechanischem Verschleiß und Ermüdungserscheinungen ausgesetzt ist. Darüber hinaus macht die Komplexität der Vorrichtung die Reparatur und den Service kompliziert.

Die US 5,560,599 beschreibt eine Vorrichtung zum Verlangsamen von Signaturen, die in einem Falzapparat transportiert werden. Die Vorrichtung umfasst eine Vielzahl von rotierenden Greifern, die durch einen Satz von gegenläufig rotierenden oberen und unteren Rollen definiert werden, welche die vorlaufende Kante einer Signatur aufnehmen, welche die Transportvorrichtung verlässt.

Die Verzögerungstrommel hat eine Vielzahl von Schwenkarmen, die schwenkbar an einer Schwenkscheibe aufgenommen sind und um eine erste Achse rotieren, wobei die Schwenkarme über ein Steuer-Verbindungselement mit einer Steuerscheibe verbunden sind. Die in dem Patent beschriebene Vorrichtung hat den Nachteil, dass eine komplexe Anordnung von einer Vielzahl von mechanischen Teilen, beispielsweise den oberen und unteren Rollen und die Schwenkscheibe, erforderlich sind, um beispielsweise die flachen Produkte zu übergeben. Durch die Komplexität ist die Vorrichtung mechanischem Verschleiß und Ermüdungserscheinungen ausgesetzt. Darüber hinaus macht die Komplexität der Vorrichtung die Reparatur und den Service kompliziert.

Dem gemäß ist es eine Aufgabe der vorliegenden Erfindung, eine Vorrichtung und ein Verfahren zur kontinuierlichen Handhabung einer Signatur zu schaffen, wenn diese den Falzapparat in einer Rotationsdruckmaschine verlässt und zu einem Auslagesystem zur Weiterverarbeitung transportiert wird. Eine weitere oder alternative Aufgabe der vorliegenden Erfindung ist darin zu sehen, eine Vorrichtung zum Verzögern aufeinander folgender Signaturen zu schaffen, sowie eine Vorrichtung zu schaffen, mit der der Transport von aufeinanderfolgenden Signaturen von einem Falzapparat zu einem Auslagesystem in einer geordneten Weise mit einer minimalen Störung ermöglicht wird.

Diese Aufgabe wird gemäß der Erfindung durch die Merkmale von Anspruch 1, 11 und 15 gelöst.

Weitere Merkmale der Erfindung sind in den Unteransprüchen enthalten.

Eine erfindungsgemäße Vorrichtung zum Transport eines bogenförmigen Produkts, zeichnet sich aus durch einen eine endlose Schleife bildenden elastischen Riemen, der eine Innenfläche aufweist, eine die Innenfläche kontaktierende erste Antriebseinheit, eine im Abstand von der ersten Antriebseinheit angeordnete und die Innenfläche des elastischen Riemens kontaktierende zweite Antriebseinheit, welche den elastischen Riemen mit einer von der Geschwindigkeit der ersten Antriebseinheit unterschiedlichen Geschwindigkeit antreibt, und eine Vielzahl von am elastischen Riemen angeordneten Greifern zum Ergreifen des bogenförmigen Produkts.

Mit dem erfindungsgemäßen elastischen Riemen oder elastischen Band ergibt sich die Möglichkeit einer positiven Verlangsamung der Signaturen, d.h. einer Verlangsamung, bei der die Signaturen stets kontrolliert zwangsgeführt werden, mit einem einfacheren Mechanismus zu geringeren Kosten und mit einer höheren Zuverlässigkeit.

Vorzugsweise weisen die erste und die zweite Antriebseinheit weiterhin eine Vielzahl von Nuten oder Ausnehmungen auf, die entlang der Außenfläche von Riemenscheiben oder Antriebsriemenscheiben der ersten und zweiten Antriebseinheiten angeordnet sind. Der elastische Riemen kann auf seiner Innenseite eine Vielzahl von Auswölbungen oder Ausbuchtungen aufweisen, die in der Weise geformt sind, dass sie in die Nuten hineinpassen, d.h. diesen von ihrer Form her entsprechen. Hierdurch ergibt sich der Vorteil, dass die Nuten mit den Auswölbungen zusammenarbeiten und hierdurch eine synchrone Rotation zwischen der ersten Antriebseinheit und der zweiten Antriebseinheit liefern. Ferner wird ein kumulativer Schlupf des elastischen Riemens verhindert.

Die erste und die zweite Antriebseinheit umfassen vorzugsweise Riemenscheiben oder Antriebsriemenscheiben oder Rollen, über die der elastische Riemen läuft.

Bei einer bevorzugten Ausführungsform der Erfindung umfasst die erste Antriebseinheit vorzugsweise eine Antriebsriemenscheibe mit einem Radius, der sich vom Radius der Antriebsriemenscheibe der zweiten Antriebseinheit unterscheidet. Vorteilhafterweise erzeugen die unterschiedlichen Radien eine Oberflächengeschwindigkeitsdifferenz, die die Geschwindigkeit des elastischen Riemens und damit des flachen Produkts, das von an dem elastischen Riemen angeordneten Greifern gehalten wird, ändert. So kann beispielsweise eine Signatur an der einen großen Radius aufweisenden Antriebseinheit mit einer hohen Geschwindigkeit aufgenommen werden und an der einen kleinen Radius aufweisenden Antriebseinheit bei einer niedrigen Geschwindigkeit fallengelassen oder abgelegt werden. Der Wechsel der Radien verändert die Oberflächengeschwindigkeit der Antriebseinheiten, die wiederum die Geschwindigkeit des elastischen Riemens verändern oder beeinflussen. Der Geschwindigkeitswechsel des elastischen Riemens tritt dabei an zwei Geschwindigkeits-Übergangs-Regionen auf, die um die Punkte herum angeordnet sind, an denen der elastische Riemen die Antriebseinheiten kontaktiert. Der Transfer des gefalzten Produkts von der Vorrichtung zum Transport von flachen Produkten zu einer nachgeordneten Vorrichtung oder zu einer Ablagestelle kann an einem beliebigen Punkt vorgenommen werden, erfolgt jedoch vorzugsweise nicht im Bereich der Geschwindigkeits-Übergangs-Regionen. Der elastische Riemen dehnt sich und zieht sich in Abhängigkeit von den Geschwindigkeitsänderungen zusammen.

Die erste Antriebseinheit kann weiterhin eine Antriebsriemenscheibe aufweisen, die den gleichen Radius wie die Antriebsriemenscheibe der zweiten Antriebseinheit besitzt, wobei die erste Antriebseinheit mit einer Rotationsgeschwindigkeit laufen kann, die sich von der Rotationsgeschwindigkeit der zweiten Antriebseinheit unterscheidet. In vorteilhafter Weise erzeugen die unterschiedlichen Rotationsgeschwindigkeiten Differenzen in der Oberflächengeschwindigkeit, die die Geschwindigkeit der am elastischen Riemen befestigten Greifer ändern, welche das bedruckte oder bogenförmige Produkt halten. So kann beispielsweise eine Signatur an der eine hohe Rotationsgeschwindigkeit aufweisenden Antriebseinheit mit einer hohen Geschwindigkeit aufgenommen werden und an der eine niedrige Rotationsgeschwindigkeit aufweisenden Antriebseinheit bei einer geringen Geschwindigkeit abgelegt oder fallengelassen werden. Der Unterschied in der Rotationsgeschwindigkeit verändert oder beeinflusst die Geschwindigkeit der Signaturen, da die eine langsame Rotationsgeschwindigkeit aufweisende Antriebseinheit mit einer geringeren Oberflächengeschwindigkeit arbeitet als die eine große Rotationsgeschwindigkeit aufweisende Antriebseinheit, was wiederum die Geschwindigkeit des elastischen Riemens beeinflusst.

Eine bevorzugte Ausführungsform der erfindungsgemäßen Vorrichtung zeichnet sich dadurch aus, dass ein Register-Mechanismus vorgesehen ist, der mit einer Vorrichtungen zur Übertragung von Antriebsleistung verbunden ist, um die Vorrichtungen zur Übertragung von Antriebsleistung mit einer weiteren Vorrichtung zur Übertragung von Antriebsleistung zu synchronisieren, wobei die Vorrichtungen zur Übertragung von Antriebsleistung jeweils eine Antriebseinheit umfassen.

Hierdurch ergibt sich der Vorteil, dass die Reparatur eines defekten Elements vergleichsweise einfach ist. So kann der Motor anstelle eines Teils eines komplexen mechanischen Mechanismus ersetzt werden. In gleicher Weise können die erste und die zweite Antriebseinheit dadurch synchronisiert werden, dass die Geschwindigkeiten der Motoren eingestellt werden.

Die Transportvorrichtung kann weiterhin eine Vielzahl von translatorisch verfahrbaren frei drehenden Antriebseinrichtungen aufweisen, die in der Weise positioniert sind, dass sie den elastischen Riemen kontaktieren, und kann weiterhin einen Register-Mechanismus zur Synchronisation der beiden Vorrichtungen zur Übertragung von Antriebsleistung aufweisen, so dass eine Phasenbeziehung zwischen den Antriebseinrichtungen und den Transferzeiten für das gefalzte Material auftreten kann, bzw. eine Phasenbeziehung zwischen diesen hergestellt wird.

Jede der Vielzahl von translatorisch verfahrbaren freidrehenden Antriebseinheiten kann weiterhin eine Vielzahl von Nuten aufweisen, die entlang der Außenflächen einer jeden translatorisch verfahrbaren freidrehenden Antriebseinheit angeordnet sind.

Jede der Vielzahl von translatorisch verfahrbaren freidrehenden Antriebseinheiten umfasst weiterhin vorzugsweise Riemenscheiben oder Rollen.

Die verbesserte Vielseitigkeit oder Flexibilität erlaubt, dass die Erfindung in einer Vielzahl von unterschiedlichen Konfigurationen in Druckmaschinen eingesetzt werden kann.

Jede der Vielzahl von translatorisch verfahrbaren freidrehenden Antriebseinheiten kann unterschiedliche Radien aufweisen. Die unterschiedlichen Radien ermöglichen es, dass die translatorisch verfahrbaren freidrehenden Antriebseinheiten mit dem elastischen Riemen in Synchronisation verbleiben.

Gemäß einer weiteren Ausführungsform der Erfindung kann diese weiterhin ein Steuerungssystem aufweisen, welches eine Translation oder ein Verfahren einer jeden der translatorisch verfahrbaren freidrehenden Antriebseinrichtungen und des Register-Mechanismus bewirkt. Hierdurch wird in vorteilhafter Weise die Phaseneinstellung oder Phasenbeziehung zwischen den Antriebseinrichtungen und den Transferzeiten oder Laufzeiten für das gefalzte Material verbessert.

Die vorliegende Erfindung betrifft weiterhin ein Verfahren zum Verändern der Geschwindigkeit einer Signatur, welches die folgenden Schritte aufweist:
Ergreifen eines flachen Produkts von einer ersten Vorrichtung mit einer Greifervorrichtung, die an einem endlosen elastischen Riemen befestigt ist,
Rotieren des endlosen elastischen Riemens durch eine erste Antriebseinheit und eine zweite Antriebseinheit, um das flache Produkt zu bewegen und das flache Produkt freizugeben.

Obwohl der Abstand der Auswölbungen des Riemens in nicht gedehntem Zustand des Riemens gleichförmig ist, wird der Riemen beim Betrieb desselben in nicht gleichförmiger Weise gedehnt und es tritt ein nicht gleichförmiger Abstand der Auswölbungen zueinander auf. Dem gemäß unterscheidet sich der Abstand der Auswölbungen an der ersten Antriebseinheit von dem Abstand der Auswölbungen an der zweiten Antriebseinheit.

Die vorliegende Erfindung kann in gleicher Weise einen auf Riemenscheiben ohne Ausnehmungen geführten elastischen Riemen umfassen. Hierbei tritt eine stationäre Längung des Riemens auf, obwohl zwischen beiden Antriebsriemenscheiben eine große Geschwindigkeitsdifferenz besteht. Wenn der Riemen durch eine der Antriebseinheiten angetrieben wird, erhält der Riemen die Geschwindigkeit dieser Antriebseinheit. Hierdurch hat das Segment des Riemens, welches die Geschwindigkeit der Antriebseinheit erlangt, dieselbe ungedehnte Länge, wenn es die Geschwindigkeit der anderen Antriebseinheit erhält. Dem gemäß hat der elastische Riemen bei einer höheren Geschwindigkeit eine höhere Spannung und bei einer niedrigeren Geschwindigkeit eine niedrigere Spannung. Der Übergang der Riemengeschwindigkeit tritt dabei auf, wenn der Riemen die erste oder zweite Antriebseinheit verlässt und die freie Länge oder den freien Abschnitt des Riemens zwischen den Antriebseinheiten erreicht.

Die Timingelemente, d.h. die auf der Innenseite des Riemens angeordneten Auswölbungen oder Zähne, stellen sicher, dass der Riemen mit der ersten und zweiten Antriebseinheit synchronisiert ist, so dass kein kumulativer Schlupf auftritt und die erste und die zweite Antriebseinheit miteinander durch die Vorrichtung zur Übertragung von Antriebsleistung synchronisiert werden.

Die Erfindung wird nachfolgend mit Bezug auf die Zeichen beschrieben.

In den Zeichnungen zeigen:
- Fig. 1: eine Seitenansicht einer ersten Ausführungsform der erfindungsgemäßen Vorrichtung zum Transport von flachen Produkten, die eine erste Antriebseinheit und eine zweite Antriebseinheit mit Antriebsriemenscheiben unterschiedlicher Radien aufweist,
- Fig.2: eine Seitenansicht des elastischen Riemens, welcher sich in einem ungedehnten Zustand befindet,
- Fig.3: eine Seitenansicht einer zweiten Ausführungsform der Vorrichtung zum Transport von flachen Produkten, die eine erste Antriebseinheit und eine zweite Antriebseinheit mit Antriebsriemenscheiben gleichen Durchmessers umfasst,
- Fig.4: eine Seitenansicht mit einer dritten Ausführungsform der Vorrichtung zum Transport von flachen Produkten, die einen Mechanismus zur Registereinstellung aufweist,
- Fig.5: eine Aufsicht auf eine Vorrichtung zur Übertragung von Antriebsleistung, die eine Antriebseinheit enthält.

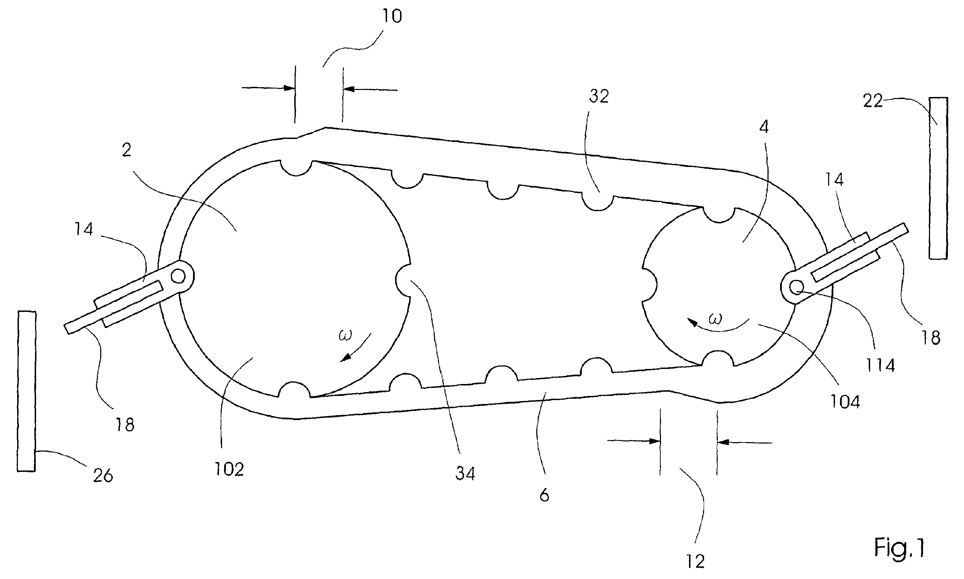

Fig. 1 zeigt eine Seitenansicht einer ersten Ausführungsform der Vorrichtung zum Transport von flachen Produkten, die eine erste Antriebseinheit 2 und eine zweite Antriebseinheit 4 umfasst. Die erste Antriebseinheit 2 besitzt eine Antriebsriemenscheibe 102, die einen größeren Radius als eine Antriebsriemenscheibe 104 der zweiten Antriebseinheit 4 aufweist.

Die erste Antriebseinheit 2 und die zweite Antriebseinheit 4 treiben einen endlosen elastischen Riemen 6 in einer Kreisrichtung durch Übertragen der Rotation der Antriebseinheiten 2, 4 auf den elastischen Riemen 6 an einem Ort an, an dem die Antriebseinheiten 2, 4 die innere Oberfläche des elastischen Riemens 6 kontaktieren.

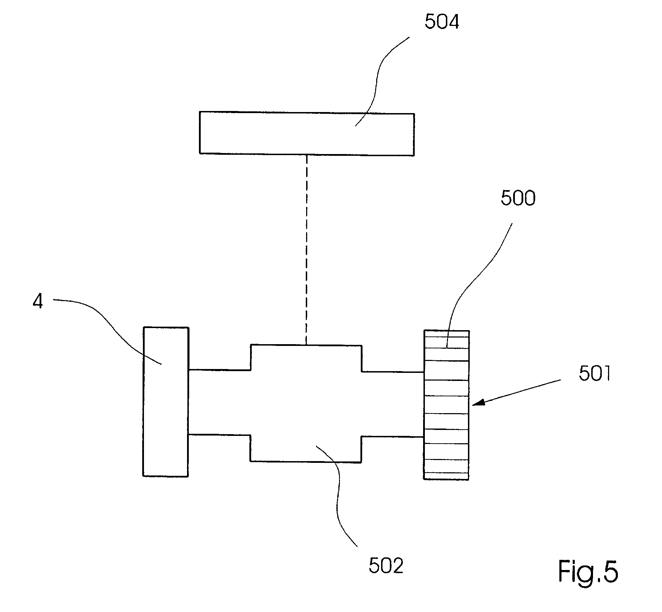

Die ersten und zweiten Antriebseinheiten 2, 4 können durch Zahnräder im Verhältnis 1:1 antriebsmäßig verbunden sein, in der Weise, dass die erste und die zweite Antriebseinheit 2, 4 dieselbe Rotationsgeschwindigkeit aufweisen. Ein größerer Radius, z. B. ein um die Hälfte größerer Radius der ersten Antriebseinheit 2 erzeugt eine Oberflächengeschwindigkeitsdifferenz in der ersten Antriebseinheit 2. Die Geschwindigkeitsdifferenz führt dazu, dass der elastische Riemen sich deformiert und seine Geschwindigkeit verändert. Die erste Antriebseinheit 2 wird durch eine Vorrichtung zur Übertragung von Antriebsleistung angetrieben, wie dies in Fig. 5 gezeigt ist, welche der ersten Antriebseinheit 2 Antriebsleistung zuführt und diese synchronisiert. Die zweite Antriebseinheit 4 wird durch ein Getriebe angetrieben, dass mit einer Vorrichtung zur Übertragung von Antriebsleistung für die Antriebseinheit 2 verbunden ist, oder durch eine weitere Vorrichtung zur Übertragung von Antriebsleistung, die, wie in Fig. 5 gezeigt, der zweiten Antriebseinheit 4 unabhängig Antriebsleistung zuführt und diese synchronisiert.

Beim Verlassen der ersten Antriebseinheit 2 tritt der elastische Riemen 6 in eine Übergangsregion mit niedrigerer Geschwindigkeit 10 ein, in der sich der elastische Riemen 6 zusammenzieht und die Geschwindigkeit reduziert. Beim Verlassen der zweiten Antriebseinheit 4 tritt der elastische Riemen 6 in eine Übergangsregion mit hoher Geschwindigkeit 12 ein, in der sich der elastische Riemen streckt oder ausdehnt und die Geschwindigkeit erhöht. Jeder einer Vielzahl von mit dem elastischen Riemen 6 verbundenen Greifern 14 ergreift ein flaches Produkt 18 von einer ersten Vorrichtung 26 und gibt das flache Produkt 18 an eine zweite Vorrichtung 22, bzw. gibt das Produkt 18 im Bereich der zweiten Vorrichtung 22 frei. Die Produkte 18 werden dem gemäß von der Geschwindigkeit der Rolle 2 auf die Geschwindigkeit der Rolle 4 verlangsamt. Der Transfer der Produkte von der Vorrichtung zum Transport von flachen Produkten zu einer nachgeordneten Vorrichtung oder zu einer Ablagestelle kann dabei an jedem beliebigen Punkt des elastischen Riemens 6 erfolgen; erfolgt jedoch vorzugsweise nicht in der Übergangsregion mit hoher Geschwindigkeit 12 oder Übergangsregion mit niedrigerer Geschwindigkeit 10.

Der Transfer der flachen Produkte, vorzugsweise bedruckte Bogen oder Signaturen, kann durch Nocken erfolgen, die Greifer 14 öffnen und schließen. Die Vorrichtungen 22 und 26 können beispielsweise Transportbänder sein. Obwohl lediglich zwei Greifer 14 gezeigt sind, können mehr als zwei Greifer 14 im Abstand zueinander entlang des Riemens 6 angeordnet werden, vorzugsweise in gleichen Abständen. Der Riemen 6 kann aus Gummi gefertigt sein, und die Greifer 14 können mit den Riemen 6 über Stahlstäbe oder Stahlstifte verbunden sein, die in das Gummi des elastischen Riemens 6 eingebettet sind.

Jeder einer Vielzahl von entlang einer Außenkante der ersten und zweiten Antriebseinheit 2, 4 angeordneten Nuten 34 befindet sich in Eingriff mit einer Vielzahl von Auswölbungen oder Erhebungen 32, die auf der inneren Oberfläche des elastischen Riemens 6 angeordnet sind, wobei jede der Auswölbungen 32 in der Weise geformt ist, dass sie in eine zugehörige der Nuten 34 hineinpasst, um die erste Antriebseinheit 2 mit der zweiten Antriebseinheit 4 zu synchronisieren. Die Nuten 34 der ersten Antriebseinheit 2 unterscheiden sich in ihrem Abstand von den Nuten 34 der zweiten Antriebseinheit 4, da der elastische Riemen 6 während des Betriebs in nicht gleichförmiger Weise gedehnt wird, was zu einer nicht gleichförmigen Dehnung oder Längung der Segmente des Riemens zwischen den Auswölbungen 32 führt.

Die erste Antriebseinheit 2 und die zweite Antriebseinheit 4 können durch Riemenscheiben, bzw. Antriebsriemenscheiben oder durch Rollen gebildet werden, können jedoch auch in anderer Weise ausgestaltet sein.

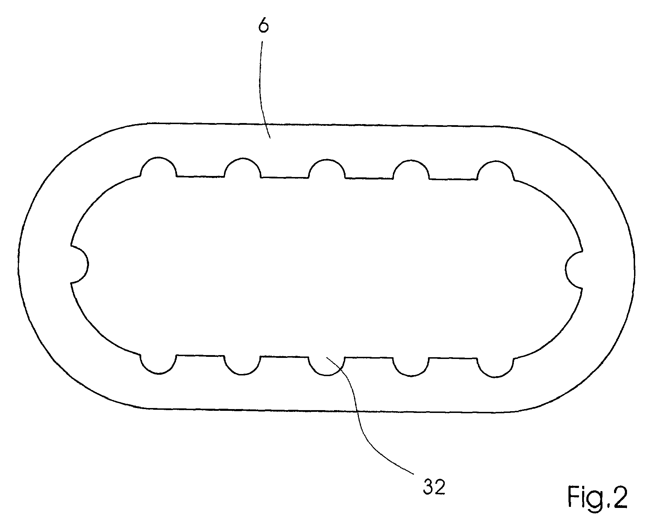

Fig. 2 zeigt eine Seitenansicht des elastischen Riemens 6, der sich in einem nicht gedehnten Zustand befindet. Der Abstand der Auswölbungen 32 ist hierbei gleichförmig, obwohl der Riemen 6 während des Betriebs in einer nicht gleichförmigen Weise gedehnt wird, was zu einem nicht gleichförmigen Abstand der Auswölbungen 32 zueinander führt.

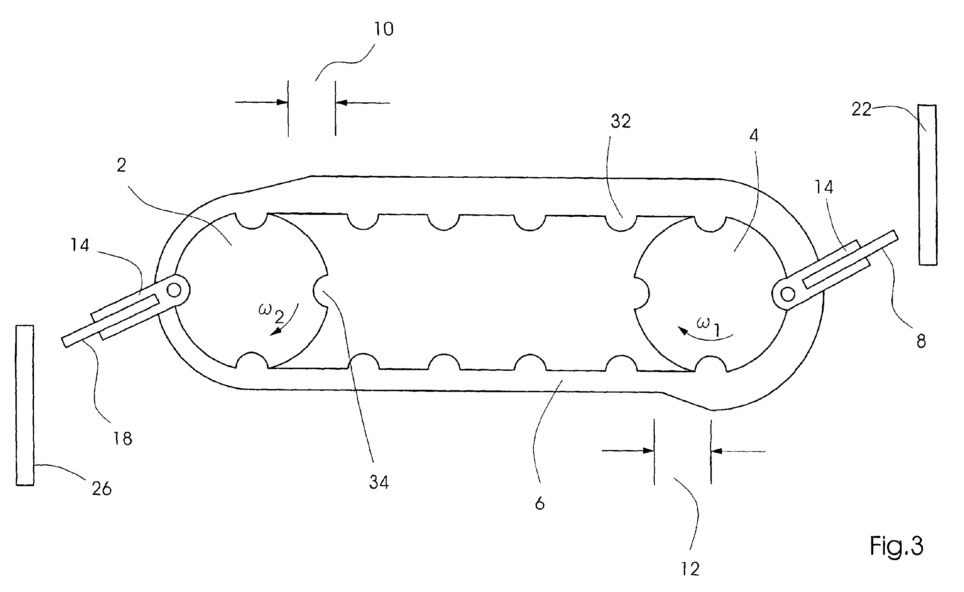

Fig. 3 zeigt eine Seitenansicht einer zweiten Ausführungsform einer Vorrichtung zum Transport von flachen Produkten, die eine erste und zweite Antriebseinheit 2, 4 mit Antriebsriemenscheiben aufweist, die den gleichen Radius besitzen.

Die erste Antriebseinheit 2 und die zweite Antriebseinheit 4 treiben hierbei den endlosen elastischen Riemen 6 umlaufend in einer Richtung dadurch an, dass sie die Rotation der Antriebseinheiten 2,4 auf den elastischen Riemen 6 an den Krümmungen oder Bögen übertragen, an denen die Antriebseinheiten 2, 4 sich in Kontakt mit der inneren Oberfläche des elastischen Riemens 6 befinden. Die erste Antriebseinheit 2 und die zweite Antriebseinheit 4 haben hierbei denselben Radius, weisen jedoch unterschiedliche Rotationsgeschwindigkeiten auf. Die unterschiedlichen Rotationsgeschwindigkeiten werden in unterschiedliche Oberflächengeschwindigkeiten überführt, die wiederum eine Geschwindigkeitsdifferenz innerhalb des elastischen Riemens 6 hervorrufen. Die erste Antriebseinheit 2 und die zweite Antriebseinheit 4 können weiterhin in der Weise über Getriebe oder Zahnräder miteinander gekoppelt sein, dass unterschiedliche Rotationsgeschwindigkeiten der ersten und der zweiten Antriebseinheit 2, 4 erzeugt werden, beispielsweise 3 : 1. Die Geschwindigkeitsdifferenz führt dazu, dass der elastische Riemen 6 deformiert wird und seine Geschwindigkeit ändert.

Die erste Antriebseinheit 2 wird, wie in Fig. 5 gezeigt, durch eine erste einer Vielzahl von Vorrichtungen zur Übertragung von Antriebsleistung angetrieben, die der ersten Antriebseinheit 2 Antriebsleistung zuführen. Die zweite Antriebseinheit 4 kann in gleicher Weise durch eine der Vorrichtungen zur Übertragung von Antriebsleistung oder durch einen entsprechenden Getriebezug der Vorrichtung zur Übertragung von Antriebsleistung für die erste Antriebseinheit 2 angetrieben werden.

Beim Verlassen der ersten Antriebseinheit 2 tritt der elastische Riemen 6 in die Übergangsregion niedriger Geschwindigkeit 10 ein, in der sich der elastische Riemen 6 zusammenzieht und die Geschwindigkeit verringert. Bei Verlassen der zweiten Antriebseinheit 4 tritt der elastische Riemen 6 in die Übergangsregion hoher Geschwindigkeit 12 ein, in der der elastische Riemen 6 gedehnt und die Geschwindigkeit erhöht wird. Jeder der am elastischen Riemen 6 befestigten Vielzahl von Greifern 14 ergreift dabei das flache Produkt 18 von der ersten Vorrichtung 22 und gibt das flache Produkt 18 im Bereich der zweiten Vorrichtung 26 frei. Der Transfer (des flachen Produkts 18) kann hierbei an jedem Punkt des elastischen Riemens 6 erfolgen, wird jedoch vorzugsweise nicht in der Übergangsregion hoher Geschwindigkeit 12 oder niedriger Geschwindigkeit 10 durchgeführt.

Jede der Vielzahl von entlang der Außenfläche der ersten Antriebseinheit 2 und zweiten Antriebseinheit 4 angeordneten Nuten 34 befindet sich mit einer der Vielzahl von Auswölbungen 32 in Eingriff, die auf der Innenfläche des elastischen Riemens 6 angeordnet sind, wobei jede der Auswölbungen 32 von der Form her entsprechend der Form der Nuten 34 ausgebildet ist, und in diese hineinpasst, um die erste Antriebseinheit 2 mit der zweiten Antriebseinheit 4 zu synchronisieren. Die Nuten 34 der ersten Antriebseinheit 2 unterscheiden sich in ihrem Abstand von den Nuten 34 der zweiten Antriebseinheit 4, da der elastische Riemen 6 während des Betriebs in einer nicht gleichförmigen Weise gedehnt wird, was zu einer nicht gleichmäßigen Dehnung des Riemens 6 zwischen jeder der Auswölbungen 32 führt.

Die erste Antriebseinheit 2 und die zweite Antriebseinheit 4 können Riemenscheiben bzw. Antriebsriemenscheiben oder Rollen umfassen, können jedoch auch in anderer Weise ausgebildet sein.

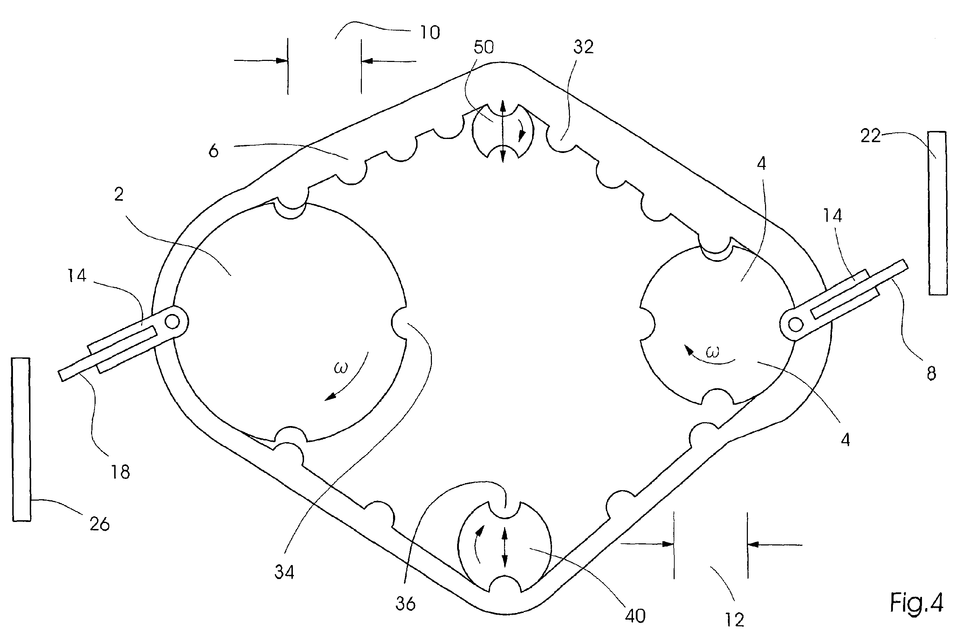

Fig. 4 zeigt eine Seitenansicht einer dritten Ausführungsform einer Vorrichtung zum Transport von flachen Produkten.

Die erste Antriebseinheit 2 und die zweite Antriebseinheit 4 treiben einen endlosen elastischen Riemen 6 in einer Kreisrichtung an, dadurch, dass sie die Rotation der Antriebseinheiten 2, 4 auf den elastischen Riemen 6 im Bereich der Bögen und Krümmungen übertragen, an denen die Antriebseinheiten 2, 4 in Kontakt mit der inneren Oberfläche des elastischen Riemens 6 sind. Die erste und zweite Antriebseinheit 2, 4 sind durch einen Zahnradzug im Verhältnis 1: 1 antriebsmäßig miteinander gekoppelt, wobei ein größerer Radius, z.B. ein um die Hälfte größerer Radius, der ersten Antriebseinheit 2 eine Geschwindigkeitsdifferenz der Oberfläche in der Antriebseinheit 2 bewirkt. Die Geschwindigkeitsdifferenz führt dazu, dass der elastische Riemen 6 deformiert wird und die Geschwindigkeit ändert.

Die ersten und zweiten Antriebseinheiten 2, 4 werden, wie in Fig. 5 gezeigt ist, durch wenigstens eine der Vorrichtungen zur Übertragung von Antriebsleistung angetrieben, welche der ersten Antriebseinheit 2 und zweiten Antriebseinheit 4 Antriebsleistung zuführt und die erste Antriebseinheit 2 und die zweite Antriebseinheit 4 miteinander synchronisiert.

Beim Verlassen der ersten Antriebseinheit 2 tritt der elastische Riemen 6 in die Übergangsregion niedriger Geschwindigkeit 10 ein, in der der elastische Riemen 6 sich zusammenzieht und die Geschwindigkeit reduziert. Beim Verlassen der zweiten Antriebseinheit 4 tritt der elastische Riemen 6 in die Übergangsregion hoher Geschwindigkeit 12 ein, in der der elastische Riemen 6 gedehnt wird und die Geschwindigkeit erhöht. Jeder der am elastischen Riemen 6 befestigten Greifer 14 gibt die flachen Produkte 18 an der ersten Vorrichtung 22 frei und ergreift die flachen Produkte 18 von der zweiten Vorrichtung 26. Der Transfer kann hierbei an einem beliebigen Punkt des Riemens 6 erfolgen, wird jedoch vorzugsweise nicht im Bereich der Übergangsregion hoher Geschwindigkeit 12 oder Übergangsregion niedriger Geschwindigkeit 10 durchgeführt.

Jede der Vielzahl von Nuten 34, die entlang der Außenfläche der ersten Antriebseinheit 2 und der zweiten Antriebseinheit 4 angeordnet sind, befindet sich in Eingriff mit einer der Auswölbungen oder Erhebungen 32, die auf der Innenfläche des elastischen Riemens 6 angeordnet sind. Jede der Auswölbungen 32 ist hierbei in der Weise geformt, dass sie in jede der Nuten 34 hineinpasst, um eine Synchronisation sicherzustellen.

Um die Phasenlage zwischen den Antriebseinheiten 2, 4 und den Transferzeiten für die Signaturen zu verändern, kann eine Vielzahl von translatorisch verfahrbaren nicht angetriebenen Einheiten vorgesehen sein, die eine translatorisch verfahrbare freidrehende Rolle niedriger Geschwindigkeit 50 und eine translatorisch verfahrbare nicht angetriebene Rolle hoher Geschwindigkeit 40 aufweisen, welche die Innenoberfläche des elastischen Riemens 6 kontaktieren. Die nicht angetriebenen Rollen 50, 40 können sich in der in Fig. 4 dargestellten Weise in der gleichen Richtung aufwärts und abwärts bewegen, so dass die Länge des Riemens 6 auf der einen Seite erhöht wird, während die Länge des Riemens 6 auf der anderen Seite verkürzt wird, wodurch die Phase der Transfer- oder Übertragungszeiten der Signaturen verändert werden kann. Um eine korrekte Synchronisation sicherzustellen, weisen die translatorisch verfahrbaren angetriebenen Rollen hoher Geschwindigkeit 40 und niedriger Geschwindigkeit 50 eine Vielzahl von zweiten Nuten 36 auf, die entlang der Außenfläche der translatorisch verfahrbaren nicht angetriebenen Rollen hoher Geschwindigkeit 40 und niedriger Geschwindigkeit 50 angeordnet sind. Jede der zweiten Nuten 36 ist in der Weise ausgeformt, dass sie die Auswölbungen 32 aufnehmen kann.

Die translatorisch verfahrbare nicht angetriebene Rolle niedriger Geschwindigkeit 50 und hoher Geschwindigkeit 40 können Riemenscheiben, bzw. Antriebsriemenscheiben oder Rollen umfassen, oder in einer beliebigen anderen Weise ausgestaltet sein.

Fig. 5 zeigt eine Aufsicht auf eine Vorrichtung zur Übertragung von Antriebsleistung 501, die die Antriebseinheit 4 enthält. Die Vorrichtung zur Übertragung von Antriebsleistung 501 enthält ein angetriebenes Zahnrad 500, das mit einem Motor oder einem Antriebszahnrad oder einem Getriebe verbunden sein kann. Die Vorrichtung umfasst weiterhin einen Register-Mechanismus 502, der beispielsweise durch eine Kupplung zur Veränderung der Bewegung oder der Phasenlage der Antriebseinheit 4 gegenüber der Antriebseinheit 2 gebildet sein kann.

Eine Steuerungseinheit 504 kann den Register-Mechanismus 502 und die Translation, d.h. die translatorische Bewegung der nicht angetriebenen Einheiten 40, 50 steuern, und kann in gleicher Weise die Antriebseinheit 4 in der Weise synchronisieren, dass eine korrekte Phasenlage zwischen der ersten Antriebseinheit 2, der zweiten Antriebseinheit 4 und jeder der translatorisch verfahrbaren nicht angetriebenen Einheiten 40, 50 aufrecht erhalten wird. Die Steuerungseinheit 504 kann beispielsweise einen kommerziell von der Firma INTEL erhältlichen Mikroprozessor enthalten.

Weiterhin können anstelle der in den Antriebsriemenscheiben der Antriebseinheiten gebildeten Nuten schlupffreie Walzen oder Rollen verwendet werden, die mit der Innenfläche des Riemens 6 in Wechselwirkung treten.

Die Bezeichnung "bogenförmiges Produkt" soll sowohl Signaturen, als auch bogenförmige Ansammlungen sowie Einzelbogen oder Blätter umfassen, die entweder bedruckt oder unbedruckt und aus Papier oder einem anderen Material bestehen können.

Die zuvor verwendete Bezeichnung "Greifer" umfasst jede bekannte Art von Vorrichtung zum Halten, Zurückhalten oder zum Ergreifen von bogenförmigen Produkten.

Schließlich kann eine Beschleunigungsvorrichtung dadurch geschaffen werden, dass die Bogentransportrichtung umgekehrt wird und die Greifer bei einer niedrigeren Geschwindigkeit betätigt werden, um die Produkte zu ergreifen und diese an der Rolle hoher Geschwindigkeit freizugeben.

### Liste der Bezugszeichen

- 2: Erste Antriebseinheit
- 4: Zweite Antriebseinheit
- 6: Elastischer Riemen
- 10: Übergangsregion mit niedriger Geschwindigkeit
- 12: Übergangsregion mit hoher Geschwindigkeit
- 14: Greifer
- 18: Flaches Produkt
- 22: Zweite Vorrichtung an die das flache Produkt 18 freigegeben wird.
- 26: Erste Vorrichtung, von der Produkt 18 übernommen wird
- 32: Auswölbungen auf der Innenoberfläche des Riemens
- 34: Nuten
- 36: Zweite Nuten
- 40: Trantorisch verfahrbare nicht angetriebene Rolle hoher Geschwindigkeit
- 50: Translatorisch verfahrbare nicht angetriebene Rolle niedriger Geschwindigkeit
- 102: Antriebsriemenscheiben der Antriebseinheit 2
- 104: Antriebsriemenscheiben der Antriebseinheit 4
- 500: Angetriebenes Zahnrad
- 501: Vorrichtung zur Übertragung von Antriebsleistung
- 502: Register-Mechanismus
- 504: Steuerungseinheit

## Patentansprüche

1. Vorrichtung zum Transport eines bogenförmigen Produkts,
mit einer ersten Antriebseinheit (2), einer im Abstand von der ersten Antriebseinheit (2) angeordneten zweiten Antriebseinheit (4), einem eine endlose Schleife bildenden Riemen (6), der eine Innenfläche aufweist und einer Vielzahl von am Riemen (6) angeordneten Greifern (14) zum Ergreifen des bogenförmigen Produkts,
**gekennzeichnet dadurch**
**dass** der Riemen (6) elastisch ist,
**dass** sich der elastische Riemen (6) zwischen jeder Antriebseinheit (2, 4) bzw. gegebenenfalls zwischen den Antriebseinheiten (2, 4) und verfahrbaren nicht angetriebenen Rollen (40,50) geradlinig erstreckt,
**dass** die erste Antriebseinheit (2) die Innenfläche kontaktiert, und
**dass** die zweite Antriebseinheit (4) die Innenfläche kontaktiert, und den elastischen Riemen (6) mit einer von der Geschwindigkeit der ersten Antriebseinheit (2) unterschiedlichen Geschwindigkeit antreibt,
**dass** beim Verlassen der ersten Antriebseinheit (2) der elastische Riemen (6) in eine Übergangsregion niedriger Geschwindigkeit 10 eintritt, in der der elastische Riemen (6) sich zusammenzieht und die Geschwindigkeit reduziert, und dass beim Verlassen der zweiten Antriebseinheit (4) der elastische Riemen (6) in eine Übergangsregion hoher Geschwindigkeit eintritt, in der der elastische Riemen (6) gedehnt wird und die Geschwindigkeit erhöht.

2. Vorrichtung nach Anspruch 1,
**dadurch gekennzeichnet,**
**dass** die erste und die zweite Antriebseinheit (2, 4) Antriebsriemenscheiben (102, 104) umfassen.

3. Vorrichtung nach Anspruch 1
**dadurch gekennzeichnet,**
**dass** die erste und zweite Antriebseinheit (2, 4) jeweils Antriebsriemenscheiben (102, 104) mit einer Vielzahl von darin gebildeten Nuten (32) umfassen, die entlang einer Außenfläche der Antriebsriemenscheiben (102, 104) angeordnet sind.

4. Vorrichtung nach Anspruch 3,
**dadurch gekennzeichnet,**
**dass** der elastische Riemen (6) weiterhin eine Vielzahl von Auswölbungen (32) aufweist, die entlang der Innenfläche des Riemens (6) angeordnet sind, wobei die Auswölbungen (32) in der Weise geformt sind, dass sie in die Nuten (34) hineinpassen.

5. Vorrichtung nach einem der Ansprüche 1 bis 4,
**dadurch gekennzeichnet,**
**dass** die erste Antriebseinheit (2) eine erste Antriebsriemenscheibe (102) enthält, die einen vom Radius einer zweiten Antriebsriemenscheibe (104) der zweiten Antriebseinheit (4) unterschiedlichen Radius besitzt.

6. Vorrichtung nach einem der Ansprüche 1 bis 4,
**dadurch gekennzeichnet,**
**dass** die erste Antriebseinheit (2) eine erste Antriebsriemenscheibe (102) enthält, die einen Radius besitzt, der dem Radius einer zweiten Antriebsriemenscheibe (104) der zweiten Antriebseinheit (4) entspricht, und dass die Antriebsriemenscheiben (102, 104) mit unterschiedlichen Geschwindigkeiten rotieren.

7. Vorrichtung nach einem der vorhergehenden Ansprüche,
**dadurch gekennzeichnet,**
**dass** diese eine Vielzahl von translatorisch verfahrbaren nicht angetriebenen Antriebseinheiten (50, 40) aufweist, die in der Weise angeordnet sind, dass sie die Innenfläche des elastischen Riemens (6) kontaktieren.

8. Vorrichtung nach einem der vorhergehenden Ansprüche,
**dadurch gekennzeichnet,**
**dass** ein Register-Mechanismus (502) vorgesehen ist, der mit einer Vorrichtungen zur Übertragung von Antriebsleistung (501) verbunden ist, um die Vorrichtungen zur Übertragung von Antriebsleistung (501) mit einer weiteren Vorrichtung zur Übertragung von Antriebsleistung (501) zu synchronisieren, wobei die Vorrichtungen zur Übertragung von Antriebsleistung (501) jeweils eine Antriebseinheit (2, 4) umfassen.

9. Vorrichtung nach einem der vorhergehenden Ansprüche,
**dadurch gekennzeichnet,**
**dass** die Vorrichtung eine Verzögerungsvorrichtung ist.

10. Vorrichtung nach einem der Ansprüche 1 bis 8,
**dadurch gekennzeichnet,**
**dass** die Vorrichtung eine Beschleunigungsvorrichtung ist.

11. Verfahren zum Transport von bogenförmigen Produkten, den Verfahrensschritten:
Verlangsamen des bogenförmigen Produkts; und
Freigeben des bogenförmigen Produkts.
**gekennzeichnet durch** die folgenden Verfahrensschritte:
Ergreifen eines bogenförmigen Produkts mit einem an einem eine endlose Schleife bildenden elastischen Riemen (6) befestigten Greifer (14), wobei der elastische Riemen (6) eine Innenfläche aufweist und sich zwischen einer ersten Antriebseinheit (2) und einer zweiten Antriebseinheit (4) bzw. gegebenenfalls zwischen den Antriebseinheiten (2, 4) und verfahrbaren nicht angetriebenen Rollen (40,50) geradlinig erstreckt, wobei die erste Antriebseinheit (2) die Innenfläche kontaktiert, und wobei die zweite Antriebseinheit (4) die Innenfläche kontaktiert, und den elastischen Riemen (6) mit einer von der Geschwindigkeit der ersten Antriebseinheit (2) unterschiedlichen Geschwindigkeit antreibt, wobei beim Verlassen der ersten Antriebseinheit (2) der elastische Riemen (6) in eine Übergangsregion niedriger Geschwindigkeit eintritt, in der der elastische Riemen (6) sich zusammenzieht und die Geschwindigkeit reduziert, und wobei beim Verlassen der zweiten Antriebseinheit (4) der elastische Riemen (6) in eine Übergangsregion hoher Geschwindigkeit eintritt, in der der elastische Riemen (6) gedehnt wird und die Geschwindigkeit erhöht.

## Claims

1. Device for transporting a sheet-like product,
with a first drive unit (2), a second drive unit (4), which is disposed at a distance from the first drive unit (2), a belt (6), which forms a continuous loop and has an inner surface, and a plurality of grippers (14), which are disposed on the belt (6), for gripping the sheet-like product,
**characterised in**
**that** the belt (6) is resilient,
**that** the resilient belt (6) extends in a straight line between each drive unit (2, 4) or optionally between the drive units (2, 4) and mobile idle rolls (40, 50),
**that** the first drive unit (2) contacts the inner surface, and that the second drive unit (4) contacts the inner surface and drives the resilient belt (6) at a speed which is different from the speed of the first drive unit (2),
**that**, upon leaving the first drive unit (2), the resilient belt (6) enters a transition region (10) of a low speed in which the resilient belt (6) contracts and reduces the speed, and that, upon leaving the second drive unit (4), the resilient belt (6) enters a transition region of a high speed in which the resilient belt (6) is stretched and increases the speed.

2. Device according to Claim 1,
**characterised in**
**that** the first and the second drive unit (2, 4) comprise driving belt pulleys (102, 104).

3. Device according to Claim 1,
**characterised in**
**that** the first and the second drive unit (2, 4) in each case comprise driving belt pulleys (102, 104) with a plurality of grooves (32) which are formed therein and disposed along an outer surface of the driving belt pulleys (102, 104).

4. Device according to Claim 3,
**characterised in**
**that** the resilient belt (6) also has a plurality of convexities (32) which are disposed along the inner surface of the belt (6), wherein the convexities (32) are shaped such that they fit into the grooves (34).

5. Device according to any one of Claims 1 to 4,
**characterised in**
**that** the first drive unit (2) includes a first driving belt pulley (102) having a radius which is different from the radius of a second driving belt pulley (104) of the second drive unit (4).

6. Device according to any one of Claims 1 to 4,
**characterised in**
**that** the first drive unit (2) includes a first driving belt pulley (102) having a radius which corresponds to the radius of a second driving belt pulley (104) of the second drive unit (4), and that the driving belt pulleys (102, 104) rotate at different speeds.

7. Device according to any one of the preceding Claims,
**characterised in**
**that** this has a plurality of idle drive units (50, 40) which can move in translatory fashion and are disposed such that they contact the inner surface of the resilient belt (6).

8. Device according to any one of the preceding Claims,
**characterised in**
**that** a register mechanism (502) is provided which is connected to a device (501) for transmitting driving power in order to synchronise the device (501) for transmitting driving power with a further device (501) for transmitting driving power, wherein the devices (501) for transmitting driving power in each case comprise a drive unit (2, 4).

9. Device according to any one of the preceding Claims,
**characterised in**
**that** the device is a decelerating device.

10. Device according to any one of Claims 1 to 8,
**characterised in**
**that** the device is an accelerating device.

11. Method for transporting sheet-like products, comprising the method steps:
decelerating the sheet-like product; and
releasing the sheet-like product,
**characterised by** the following method steps:
gripping a sheet-like product with a gripper (14) which is fastened to a resilient belt (6) which forms a continuous loop, wherein the resilient belt (6) has an inner surface and extends in a straight line between a first drive unit (2) and a second drive unit (4) or optionally between the drive units (2, 4) and mobile idle rolls (40, 50), wherein the first drive unit (2) contacts the inner surface, and wherein the second drive unit (4) contacts the inner surface and drives the resilient belt (6) at a speed which is different from the speed of the first drive unit (2), wherein, upon leaving the first drive unit (2), the resilient belt (6) enters a transition region of a low speed in which the resilient belt (6) contracts and reduces the speed, and wherein, upon leaving the second drive unit (4), the resilient belt (6) enters a transition region of a high speed in which the resilient belt (6) is stretched and increases the speed.

## Revendications

1. Dispositif de transport d'un produit en forme de feuille, comportant une première unité d'entraînement (2), une deuxième unité d'entraînement (4), située à distance de la première unité d'entraînement (2), une courroie (6), qui forme une boucle continue et comporte une surface intérieure, et une pluralité de griffes (14), disposées sur la courroie (6) élastique et destinées à saisir le produit en forme de feuille,
**caractérisé**
**en ce que** la courroie (6) est élastique,
**en ce que** la courroie (6) élastique s'étend droite entre chaque unité d'entraînement (2, 4) ou, le cas échéant, entre les unités d'entraînement (2, 4) et des rouleaux (40, 50) non entraînés mobiles,
**en ce que** la première unité d'entraînement (2) entre en contact avec la surface intérieure, et
**en ce que** la deuxième unité d'entraînement (4) entre en contact avec la surface intérieure et entraîne la courroie (6) élastique avec une vitesse différente de la vitesse de la première unité d'entraînement (2),
**en ce que**, en sortant de la première unité d'entraînement (2), la courroie (6) élastique parvient dans une zone de transition à faible vitesse (10), dans laquelle la courroie (6) élastique se contracte et réduit sa vitesse, et
**en ce que**, en sortant de la deuxième unité d'entraînement (4), la courroie (6) élastique parvient dans une zone de transition à vitesse plus élevée (12), dans laquelle la courroie (6) élastique s'étire et augmente sa vitesse.

2. Dispositif selon la revendication 1,
**caractérisé**
**en ce que** la première et la deuxième unité d'entraînement (2, 4) comportent des poulies d'entraînement (102, 104).

3. Dispositif selon la revendication 1,
**caractérisé**
**en ce que** la première et la deuxième unité d'entraînement (2, 4) comportent chacune des poulies d'entraînement (102, 104) avec une pluralité de gorges (32), qui sont formées dans celles-ci et sont disposées le long d'une surface extérieure des poulies d'entraînement (102, 104).

4. Dispositif selon la revendication 3,
**caractérisé**
**en ce que** la courroie (6) élastique comporte en outre une pluralité de courbures (32), qui sont disposées le long de la surface intérieure de la courroie (6), les courbures (32) étant formées de telle sorte qu'elles peuvent s'engager dans les gorges (34).

5. Dispositif selon l'une quelconque des revendications 1 à 4,
**caractérisé**
**en ce que** la première unité d'entraînement (2) comporte une première poulie d'entraînement (102) avec un rayon différent du rayon d'une deuxième poulie d'entraînement (104) de la deuxième unité d'entraînement (4).

6. Dispositif selon l'une quelconque des revendications 1 à 4,
**caractérisé**
**en ce que** la première unité d'entraînement (2) comporte une première poulie d'entraînement (102) qui a le même rayon que la deuxième poulie d'entraînement (104) de la deuxième unité d'entraînement (4), et en ce que les poulies d'entraînement (102, 104) tournent avec des vitesses différentes.

7. Dispositif selon l'une quelconque des revendications précédentes,
**caractérisé**
**en ce que** ledit dispositif comporte une pluralité d'unités d'entraînement (50, 40) non entraînées, mobiles en translation, qui sont disposées de telle sorte qu'elles entrent en contact avec la surface intérieure de la courroie (6) élastique.

8. Dispositif selon l'une quelconque des revendications précédentes,
**caractérisé**
**en ce qu'**il est prévu un mécanisme de réglage de registre (502), qui est relié à un dispositif de transmission de la puissance d'entraînement (501), afin que le dispositif de transmission de la puissance d'entraînement (501) soit synchronisé avec un autre dispositif de transmission de la puissance d'entraînement (501), les dispositifs de transmission de la puissance d'entraînement (501) comportant chacun une unité d'entraînement (2, 4).

9. Dispositif selon l'une quelconque des revendications précédentes,
**caractérisé**
**en ce que** le dispositif est un dispositif de ralentissement.

10. Dispositif selon l'une quelconque des revendications 1 à 8,
**caractérisé**
**en ce que** le dispositif est un dispositif d'accélération.

11. Procédé de transport de produits en forme de feuilles, comportant les étapes :
ralentissement du produit en feuille ; et
relâchement du produit en feuille,
**caractérisé par** les étapes suivantes :
prélèvement d'un produit en forme de feuille au moyen d'une griffe (14) fixée contre une courroie (6) élastique formant une boucle continue, la courroie (6) élastique comportant une surface intérieure et s'étendant droite entre une première unité d'entraînement (2) et une deuxième unité d'entraînement (4) ou, le cas échéant, entre les unités d'entraînement (2, 4) et des rouleaux (40, 50) non entraînés mobiles, la première unité d'entraînement (2) entrant en contact avec la surface intérieure et entraînant la courroie (6) élastique avec une vitesse différente de la vitesse de la première unité d'entraînement (2), la courroie (6) élastique, en sortant de la première unité d'entraînement (2), parvenant dans une zone de transition à faible vitesse (10), dans laquelle la courroie (6) élastique se contracte et réduit sa vitesse, et la courroie (6) élastique, en sortant de la deuxième unité d'entraînement (4), parvenant dans une zone de transition à vitesse plus élevée (12), dans laquelle la courroie (6) élastique s'étire et augmente sa vitesse.
